# EUROPÄISCHE PATENTSCHRIFT

(11) **EP 0 819 273 B1**
(45) Veröffentlichungstag und Bekanntmachung des Hinweises auf die Patenterteilung: **14.11.2001**
(21) Anmeldenummer: 96905728.0
(22) Anmeldetag: 14.03.1996
(51) Int. Cl.: G05F 1/46, H02J 1/10

(54) **AUFTEILUNG VON VERSORGUNGSSTRÖMEN**
METHOD OF SPLITTING A POWER SUPPLY
REPARTITION DE COURANTS D'ALIMENTATION

(30) Priorität: 03.04.1995 DE 19512459
(43) Veröffentlichungstag der Anmeldung: 21.01.1998
(73) Patentinhaber: Fujitsu Siemens Computers GmbH, 81739 München (DE)
(72) Erfinder: POLLMEIER, Werner, D-33415 Verl (DE); WEIDNER, Ernst, D-33106 Paderborn (DE)
(74) Vertreter: Epping, Wilhelm, Dipl.-Ing.
(86) Internationale Anmeldenummer: DE9600455
(87) Internationale Veröffentlichungsnummer: WO9631818

(56) Entgegenhaltungen:
- EP-A- 0 173 104
- DE-A- 1 937 714
- US-A- 4 476 399

## Beschreibung

### Technisches Gebiet

Das Verfahren betrifft die Parallelschaltung von Stromversorgungen.

### Stand der Technik

Um eine Toleranz gegenüber Ausfällen zu erreichen, hat es sich herausgestellt, daß in Stromversorgungseinheiten eine Parallelschaltung mehrerer identisch aufgebauter Netzteile zweckmäßig ist. Um eine große Lebensdauer zu erreichen, muß dabei dafür gesorgt werden, daß im Normalfall die beiden Netzteile etwa gleichen Anteil beitragen und daher auch nur mit der halben Last (bei zwei Netzteilen) belastet werden.

Hierzu ist in der deutschen Patentschrift DE 33 20 885 C2 *) ein Verfahren angegeben, bei dem eine zusätzliche Leitung verwendet wird, mittels derer die Stromversorgungseinheiten ihre Ausgangsspannung in geringem Maße regeln, so daß die Anteile in etwa gleich werden.
*) bzw. der prioritätsgleichen US 4 476 399

Diese zusätzliche Leitung ist jedoch nicht immer verfügbar, insbesondere wenn eine Parallelschaltung in einer existierenden Verdrahtung erfolgen soll.

Aufgabe der Erfindung ist es daher, Stromversorgungen derart parallel zu schalten, daß sie in etwa gleichen Anteil an der Versorgung der Last haben und außer den notwendigerweise verbundenen Eingangsleitungen der primären Versorgung und den Ausgangsleitungen keine weitere Verbindung haben.

### Darstellung der Erfindung

Diese Aufgabe wird gelöst, indem eine Ausgangskennline eingestellt wird, die einen geringen, aber definierten Spannungsabfall bei der Hälfte (bzw. dem vorgesehenen Anteil) der maximalen Abgabelast hat.

### Kurzbeschreibung der Zeichnungen

Es zeigen
- Fig. 1: ein Prinzipschaltbild für die erfindungsgemäße Spannungsversorgung,
- Fig. 2: ein Prinzipschaltbild für die Anwendung der Erfindung in einem Schaltznetzteil,
- Fig. 3: Ausgangskennlinien der Schaltung nach Fig. 1,
- Fig. 4: die resultierende Gesamtkennlinie.

### Detaillierte Beschreibung der Erfindung

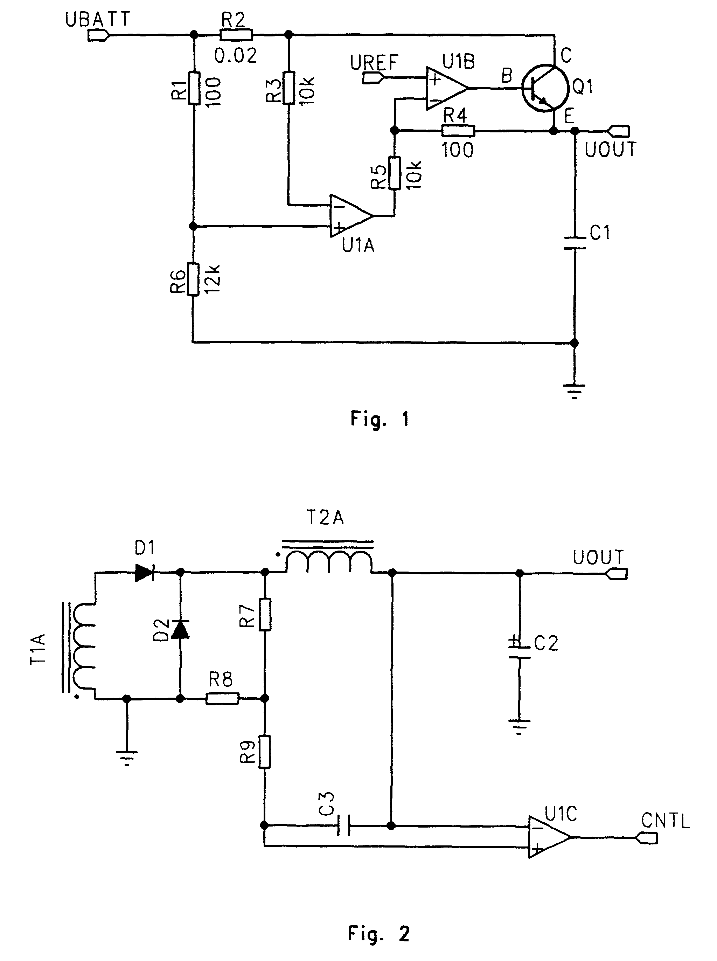

In Fig. 1 ist eine Prinzipschaltung für eine Spannungsversorgung, die eine Parallelschaltung zuläßt, gezeigt. Eine ungeregelte Gleichspannung Ubatt dient als Quelle der Versorgung, welche durch ein beliebiges Stellglied, welches der Übersichtlichkeit halber als Transistor Q1 dargestellt ist, geregelt wird und als Uout bereitgestellt wird. Dieses Stellglied Q1 wird von einem Operationsverstärker U1B gesteuert, der hauptsächlich die Ausgangsspannung Uout an der Last mit einer Referenzspannung Uref vergleicht und in der Form eines Linearreglers die Abweichung zwischen Ausgangsspannung Uout und Referenzspannung Urei minimiert. Die Ausgangsspannung Uout wird über einen Widerstand R4 an den invertierten Eingang gelegt. Der Eingangsstrom des Verstärkers U1B verursacht keinen nennenswerten Spannungsabfall am Widerstand R4.

Ein Strommeßwiderstand R2 ist in die Versorgungsleitung zum Transistor Q1 gelegt. Die an ihm abfallende Spannung ist ein direktes Maß für den Strom, den die Schaltung an den Verbraucher liefert. Lediglich zur Erläuterung sei angenommen, daß der Maximalstrom 10A und der Sollstrom 5A sei, daß also zwei Stromversorgungen mit je 5A einen Laststrom von 10A liefern. In angestrebten Normalfall soll daher ein Strom von 5A durch den Strommeßwiderstand R2 fließen, also eine Spannung von 0,1V an ihm abfallen. Diese Spannung am Widerstand R2 wird über den Widerstand R3 an den invertierenden Eingang eines zweiten Operationsverstärkers 1A gelegt. Die üblichen, dem Fachmann bekannten Maßnahmen zur Unterdrückung von Schwingungen, z.B. durch Frequenzkompensation, sind nicht dargestellt.

An den nicht-invertierten Eingang des zweiten Verstärkers U1A wird eine Vergleichsspannung gelegt, welche durch Spannungteilung mittels der Widerstände R1 und R6 aus der Versorgungsspannung Ubatt gewonnen wird und im vorliegenden Beispiel gleich der nominalen Spannung von 0,1V am Strommeßwiderstand R2 ist. Ist der Strom durch den Strommeßwiderstand R2 kleiner als der vorgegebene Nominalwert von 5A, dann wird der Ausgang des zweiten Verstärkers etwa auf Masse liegen. Ist er größer, dann wird er etwa auf der Versorgungsspannung des zweiten Verstärkers liegen. Diese Ausgangsspannung wird über den Widerstand R5 auf den invertierten Eingang des ersten Verstärkers U1B gelegt, an dem bereits über den Widerstand R4 die Ausgangsspannung Uout wirkt. Das Verhältnis der beiden Widerstände ist der gewünschte Spannungsabfall am Ausgang bei halber Last, im Beispiel 1%. Dieser Wert wird so gewählt, daß er größer ist als die maximale, durch Fertigungstoleranzen bestimmte Abweichung der Ausgangsspannungen der Versorgungen bei halber Last, bestimmt durch die Toleranz der Referenzspannung Uref und die Offsetspannung des Verstärkers U1B.

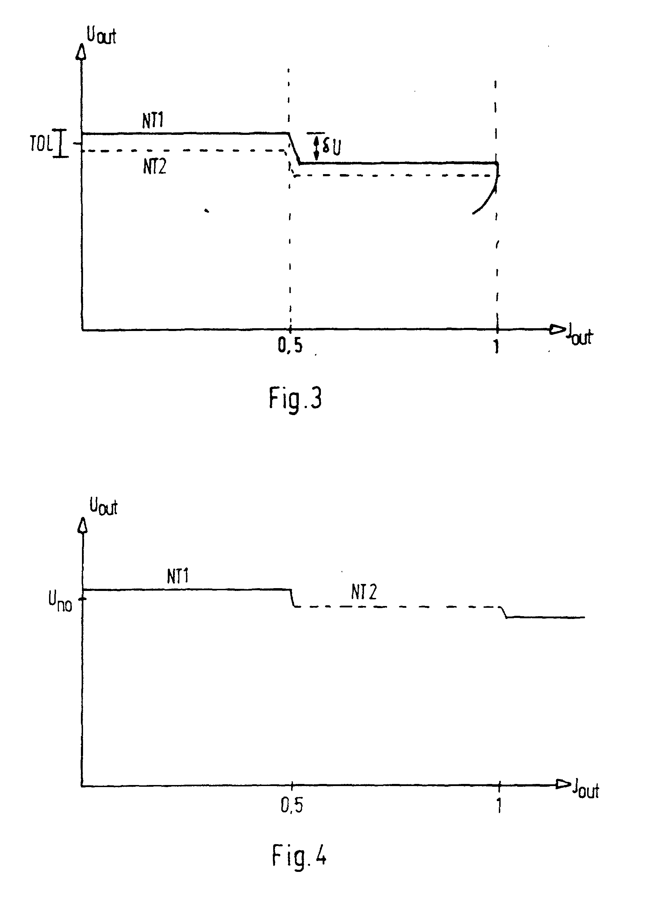

In Fig. 3 ist die idealisierte Ausgangskennline der Anordnung nach Fig. 1 dargestellt. Zunächst bei kleinen Strömen unterhalb der halben Nennlast ist nur das Netzteil NT1 mit der zufällig höheren Ausgangsspannung wirksam. Die Ausgangsspannung bleibt bis etwa zur halben Stromlast konstant, wie in Fig. 4 gezeigt. Bei der halben Stromlast gibt das Netzteil NT1 um einen Wert dU nach, welcher größer ist als die Nenntoleranz der Netzteile. Damit würde die so gegebene Spannung unter die Ausgangsspannung des zweiten Netzteils NT2 sinken, so daß dieses Netzteil NT2 nunmehr den zusätzlichen Stromberdarf übernimmt. Bis zur vollen Nominallast bleibt die gemeinsame Ausgangsspannung dann gleich. Dann gibt NT2 um dU nach, so daß jetzt NT1 die weitere Versorgung übernimmt. Bei 3/2 Nennlast würde dann auch NT2 weiter zur Versorgung beitragen, weil bei NT1 dann die in Fig. 3 angedeutet Strombegrenzung wirksam wird.

In Fig. 2 ist ein Prinzipschaltbild für die Anwendung in einem Schaltspannungswandler dargestellt, der als Flußwandler geschaltet ist. Die Spannung wird durch die Sekundärwicklung T1A bereitgestellt und mit zwei Dioden D1 und D2 gleichgerichtet. Eine Siebung erfolgt mit der Drossel T2A, welche durch den Siebkondensator C2 unterstützt wird. Als Strommeßwiderstand wird der Widerstand der Siebdrossel T2A verwendet. Die an der Siebdrossel liegende Spannung ist einerseits mit dem invertierenden Eingang eines Operationsverstärkers U1C verbunden. Durch einen Spannungsteiler aus R7 und R8 wird eine Vergleichsspannung bereitgestellt und über ein RC-Siebglied dem nicht invertierenden Eingang zugeführt. Das Siebglied aus R9 und C3 filtert die Wechselspannung des Schaltnetzteils aus und hat eine Zeitkonstante im Zehntelsekunden-Bereich. Daher erscheint am Ausgang des Operationsverstärkers U1C eine Spannung, die ein Maß für den Ausgangsstrom darstellt. Sofern der Verstärker U1C, wie dargestellt, ohne Gegenkopplung betrieben wird, ist das Signal ein digitales Signal, das eine Überschreitung des z.B. halben Nennstroms anzeigt und der Steuerung des Schaltnetzteils zugeführt wird, um dessen Ausgangsspannung geringfügig zu reduzieren, wie es bereits an Hand von Fig.1 dargestellt wurde. Bei einem netzbetriebenen Schaltspannungswandler wird dieses Signal zunächst durch beispielsweise einen Opto-Koppler auf die Primärseite übertragen werden und dann dort in den Regelkreis eingreifen.

## Patentansprüche

1. Spannungsversorgungseinheit zur unmittelbaren Parallelschaltung mit anderen gleichartigen Spannungsversorgungseinheiten, mit
a) einer Steuerschaltung, welche einen Eingang umfaßt, dessen Aktivierung die Ausgangsspannung um einen vorgegebenen Betrag reduziert, welcher größer als die Nenntoleranz der Ausgangsspannung ist,
b) einen Stromschwellwertdetektor, der den Eingang der Steuerschaltung aktiviert, wenn der Ausgangsstrom der Spannungsversorgungseinheit eine vorgegebene Schwelle überschreitet, welche gleich dem Nominalstrom der Last, dividiert durch die Anzahl der parallel geschalteten Spannungsversorgungseinheiten, ist.

2. Spannungsversorgungseinheit nach Anspruch 1, wobei an einem Strommeßwiderstand eine dem Ausgangsstrom proportionale Spannung abfällt, welche einem ersten Eingang eines Vergleichers zugeführt wird, dessen zweitem Eingang eine der vorgegebenen Schwelle entsprechender Wert zugeführt wird und beim Überschreiten des Wertes am ersten Eingang gegenüber dem Wert des zweiten Eingangs der Ausgang den Eingang der Steuerschaltung aktiviert.

3. Spannungsversorgungseinheit nach Anspruch 2, wobei die Spannungsversorgungseinheit ein Schaltspannungswandler mit einer Siebdrossel ist und als Strommeßwiederstand der Widerstand der Siebdrossel dient.

## Claims

1. Voltage supply unit for direct parallel connection with other identical voltage supply units, having
a) a control circuit which comprises an input whose activation reduces the output voltage by a predetermined amount which is greater than the rated tolerance of the output voltage,
b) a current threshold-value detector which activates the input of the control circuit when the output current of the voltage supply unit is greater than a predetermined threshold, which is equal to the nominal current of the load divided by the number of parallel-connected voltage supply units.

2. Voltage supply unit according to Claim 1, in which a voltage which is proportional to the output current and is supplied to a first input of a comparator is dropped across a current measurement resistance, the second input of which comparator is supplied with a value which corresponds to the predetermined threshold, and the output activates the input of the control circuit when the value at the first input is greater than the value of the second input.

3. Voltage supply unit according to Claim 2, in which the voltage supply unit is a switching voltage transformer with a filter inductor, and the resistance of the filter inductor is used as the current measurement resistance.

## Revendications

1. Unité d'alimentation en tension pour le branchement en parallèle direct avec d'autres unités d'alimentation en tension du même genre, comportant
a) un circuit de commande, qui comprend une entrée dont l'activation réduit la tension de sortie d'une valeur prescrite qui est plus grande que la tolérance nominale de la tension de sortie,
b) un détecteur de valeur seuil du courant, qui active l'entrée du circuit de commande si le courant de sortie de l'unité d'alimentation en tension est supérieur à un seuil prescrit qui est égal au courant nominal de la charge divisé par le nombre des unités d'alimentation en tension branchées en parallèle.

2. Unité d'alimentation en tension suivant la revendication 1, une tension qui est proportionnelle au courant de sortie et qui est envoyée à une première entrée d'un comparateur à la deuxième entrée duquel est envoyée une valeur correspondant au seuil prescrit, chutant sur une résistance de mesure du courant et, dans le cas où la valeur à la première entrée est supérieure à la valeur de la deuxième entrée, la sortie activant l'entrée du circuit de commande.

3. Unité d'alimentation en tension suivant la revendication 2, l'unité d'alimentation en tension étant un transformateur de tension de commande comportant un self de filtrage et la résistance du self de filtrage servant de résistance de mesure du courant.
